# EUROPEAN PATENT APPLICATION

(11) **EP 2 602 905 A2**
(43) Date of publication of application: **12.06.2013**
(21) Application number: 12007855.5
(22) Date of filing: 21.11.2012
(51) Int. Cl.: H02J 7/00, H02J 7/04

(54) **Power management system suitable for use with multi-series-cell batteries**

(30) Priority: 05.12.2011 US 201113311442
(71) Applicant: Broadcom Corporation, Irvine, CA 92617 (US)
(72) Inventor: Radke, Russell, Fort Collins, CO 80521 (US)
(74) Representative: Jehle, Volker Armin

(57) **Abstract**

There are disclosed herein various implementations of a power management system for powering a portable device while charging a multi-series-cell battery of the portable device when the portable device is connected to an adapter. One exemplary implementation comprises a voltage regulator for powering the portable device and a multi-mode charger receiving input power from the adapter. The multi-mode charger is operated in a switching mode for charging the multi-series-cell battery concurrently with the voltage regulator powering the portable device. In another implementation, the power management system is adapted for use with a portable device having a single-cell battery.

## Description

### BACKGROUND

As portable electronic devices such as tablet computers, smartphones, and digital media players, for example, come to support ever more powerful applications, maintaining battery life becomes an increasingly important issue. In order to maintain, and even extend battery life despite increasing power demands, some portable device manufacturers are turning to multi-series-cell batteries to power their products. However, the transition to multi-series-cell battery use introduces challenges in providing the charge-and-play functionality that most portable device users now enjoy and are likely to continue to demand.

Charge-and-play functionality refers to the ability of a portable device to turn ON and be used substantially immediately when connected to an external power source, such as to a wall electrical outlet through an alternating current (AC) adapter compatible with the portable device, for example, even when the device battery is effectively fully discharged. Conventional implementations for enabling charge-and-play functionality produce an internal supply voltage for powering the portable device, and use a linear charger to concurrently charge the device battery from that internal supply voltage. A significant constraint of the conventional approach is that the internal supply voltage available to charge the device battery is typically less than 7 volts in order to safely supply other internal circuitry of the portable device. However, because multi-series-cell batteries comprising two or more cells in series cannot be charged using such a low supply voltage, conventional approaches are incapable of properly enabling charge-and-play functionality for portable devices equipped with multi-series-cell batteries.

### SUMMARY

The present disclosure is directed to a power management system suitable for use with single-cell and multi-series-cell batteries, substantially as shown in and/or described in connection with at least one of the figures, and as set forth more completely in the claims.

According to an aspect, a power management system is provided for powering a portable device while charging a multi-series-cell battery of said portable device when said portable device is connected to an adapter, said power management system comprising:
a voltage regulator for powering said portable device;
a multi-mode charger receiving input power from said adapter;
said multi-mode charger being in a switching mode for charging said multi-series-cell battery concurrently with said voltage regulator powering said portable device.

Advantageously, said multi-mode charger is coupled directly to said adapter.

Advantageously, said voltage regulator derives input power from said multi-series-cell battery of said portable device.

Advantageously, said voltage regulator is coupled directly to said multi-series-cell battery of said portable device.

Advantageously, said voltage regulator comprises a switching regulator.

Advantageously, said voltage regulator and said multi-mode charger are implemented as an integrated circuit (IC) on a single semiconductor die.

Advantageously, said portable device is a consumer electronics device.

Advantageously, said portable device is a mobile communications device.

Advantageously, said portable device is a digital media player.

Advantageously, said portable device is a tablet computer.

Advantageously, said multi-mode charger is configured to receive an adapter voltage of greater than approximately 5 volts from said adapter.

According to an aspect, a power management system is provided for powering a portable device while charging a single-cell battery of said portable device when said portable device is connected to an adapter, said power management system comprising:
a voltage regulator receiving input power from said adapter;
said voltage regulator powering said portable device and a multi-mode charger;
said multi-mode charger being in a linear mode for charging said single-cell battery concurrently with said voltage regulator powering said portable device.

Advantageously, said voltage regulator is coupled directly to said adapter.

Advantageously, said voltage regulator comprises a switching regulator.

Advantageously, said voltage regulator and said multi-mode charger are implemented as an integrated circuit (IC) on a single semiconductor die.

Advantageously, said portable device is a consumer electronics device.

Advantageously, said portable device is a mobile communications device.

Advantageously, said portable device is a digital media player.

Advantageously, said portable device is a tablet computer.

Advantageously, said multi-mode charger is configured to receive an input voltage from said voltage regulator of less than or equal to approximately 5 volts.

### BRIEF DESCRIPTION OF THE DRAWINGS

Figure 1 shows a charge-and-play environment including a power management system suitable for use with multi-series-cell batteries, according to one implementation.
Figure 2 Figure 2 shows a block diagram of a power management system suitable for use with multi-series-cell batteries, according to one implementation.
Figure 3 shows an example implementation of a power management system adapted for use with a multi-series-cell battery.
Figure 4 shows an example implementation of a power management system adapted for use with a single-cell battery.

### DETAILED DESCRIPTION

The following description contains specific information pertaining to implementations in the present disclosure. One skilled in the art will recognize that the present disclosure may be implemented in a manner different from that specifically discussed herein. The drawings in the present application and their accompanying detailed description are directed to merely exemplary implementations. Unless noted otherwise, like or corresponding elements among the figures may be indicated by like or corresponding reference numerals. Moreover, the drawings and illustrations in the present application are generally not to scale, and are not intended to correspond to actual relative dimensions.

Charge-and-play functionality is a feature of many portable consumer electronics devices that is popular with users and that is likely to continue to be demanded by prospective purchasers of those products. As used in the present application, "charge-and-play functionality" refers to the ability of a portable device to turn ON and be used substantially immediately when connected to an external power source, even when the device battery is effectively fully discharged. In the absence of charge-and-play functionality, there can be a significant delay after the external power source is connected, while the device battery partially recharges, before the portable device can be turned ON and used.

Conventional approaches to implementing charge-and-play type systems for managing battery charging and power delivery are designed for use with single-cell batteries, and are incapable of providing the same functionality for the significant and increasingly important subset of portable devices powered by multi-series-cell batteries. Moreover, conventional approaches to providing charge-and-play functionality may do so in a relatively inefficient manner. The present application discloses a high efficiency power management system suitable for use to substantially immediately and concurrently charge and operate a multi-series-cell battery powered portable electronic device, such as a tablet computer, smartphone, or digital media player, for example.

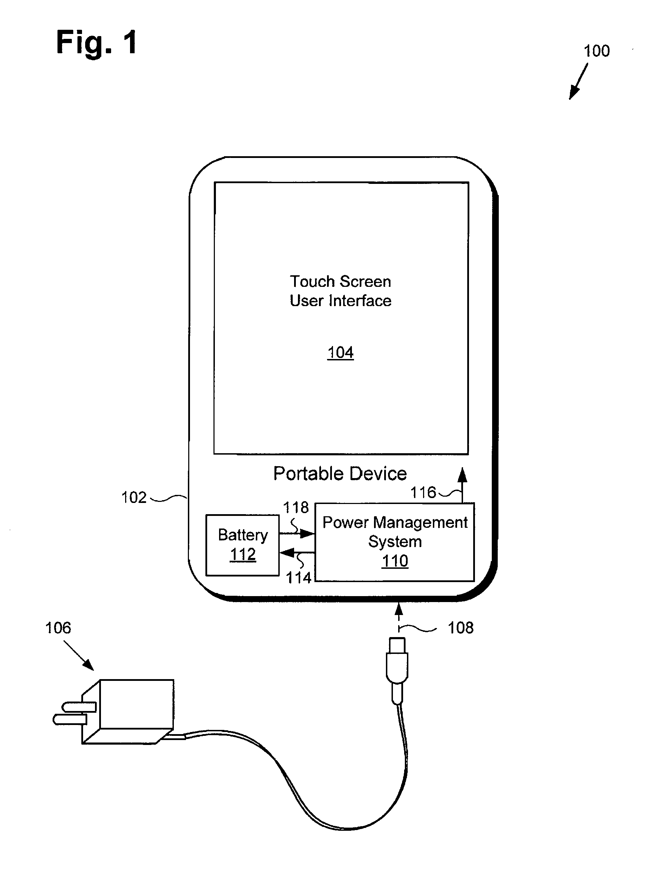

Figure 1 shows a charge-and-play environment including a power management system suitable for use with multi-series-cell batteries, according to one implementation. Charge-and-play environment 100 depicts portable device 102 including touch screen user interface 104, power management system 110, and battery 112, which may be a multi-series-cell rechargeable battery such as a multi-series-cell rechargeable lithium battery, for example. Portable device 102 may be configured to receive power from an external power source through adapter 106 providing adapter voltage 108 to portable electronic device 102. For instance, adapter 106 may be configured to connect to a nominally 110 volt mains alternating current (AC) power line through a standard wall mounted electrical outlet, and to provide adapter voltage 108 of approximately 10 volts to approximately 12 volts, for example, to portable device 102.

In one implementation, portable device 102 may comprise a mobile communications device, such as a smartphone, for example. In other implementations, portable device 102 may comprise any of a variety of portable electronic devices or systems, and may take the form of any portable consumer electronics device. For example, portable device 102 may be a tablet computer, such as an iPad™, a digital media player, such as an iPod™, or a portable gaming system, for example. It is noted that although Figure 1 characterizes adapter 106 as being configured for connection to a mains power line, in other implementations, adapter 106 may implement other power connection interfaces. For example, in one implementation, adapter 106 may be configured to draw power from another type of external power supply, such as from a personal computer (PC) or other power source through a Universal Serial Bus (USB) interface connector.

According to the implementation shown in Figure 1, power management system 110 is configured to receive adapter voltage 108 and to provide output 114 for charging battery 112, while providing output 116 for powering portable device 102 substantially concurrently. That is to say, even when battery 112 is discharged so as to be incapable of powering portable device 102, power management system 110 is configured to recharge battery 112 while concurrently delivering power for operation of portable device 102 with substantially no delay due to the discharge state of battery 112. Thus, power management system 110 is configured to enable charge-and-play functionality for portable device 102. Moreover, power management system 110 is configured to advantageously enable that charge-and-play functionality when battery 112 of portable device 102 is a multi-series-cell battery having a plurality of battery cells connected in series. It is noted that in one implementation, power management system 110 can be powered by battery 112, as indicated by path 118.

As explained above, conventional approaches to providing charge-and-play functionality produce an internal supply voltage and utilize a linear charger to charge the device battery. The limitation of this conventional approach is that the internal supply must typically be less than 7 volts in order to safely supply other internal circuitry of the portable device. However, batteries comprising two or more approximately 3.5 volt cells in series, such multi-series-cell lithium batteries, for example, cannot be charged using a supply voltage of less than 7 volts. Consequently, conventional approaches to providing charge-and-play functionality are incapable of enabling that functionality for portable devices equipped with multi-series-cell series batteries.

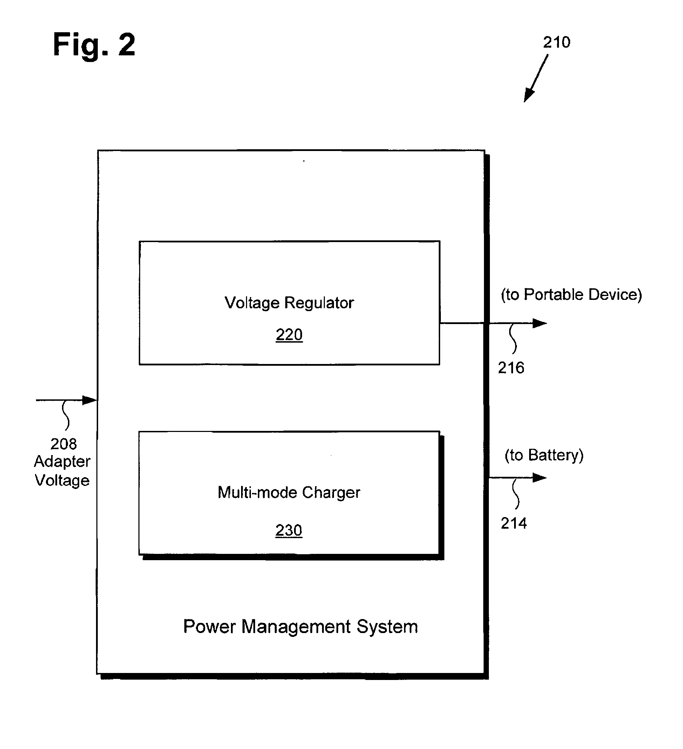

Figure 2 shows a block diagram of power management system 210, according to one implementation, capable of overcoming the drawbacks described above. As shown in Figure 2, power management system 210 comprises voltage regulator 220 and multi-mode charger 230. As further shown in Figure 2, power management system 210 is configured to receive adapter voltage 208, and to provide output 216 from voltage regulator 220 to power the portable device including power management system 210, such as portable device 102, in Figure 1, while substantially concurrently providing output 214 to charge the portable device battery, such as battery 112, in Figure 1. Power management system 210, adapter voltage 208, and power management system outputs 214 and 216 correspond respectively to power management system 110, adapter voltage 108, and power management system outputs 114 and 116, in Figure 1.

At least one advantage offered by the implementation of Figure 210 is implementation of multi-mode charger 230 in lieu of the linear charger utilized by conventional systems offering charge-and-play functionality. As a result, the voltage across multi-mode charger 230 can be much higher while maintaining high efficiency. For example, according to one implementation, multi-mode charger 230 is configured to be adaptable for use in either a linear mode or a switching mode. When charging a single-cell battery, multi-mode charger 230 can be implemented to operate in either linear or switching mode, as desired.

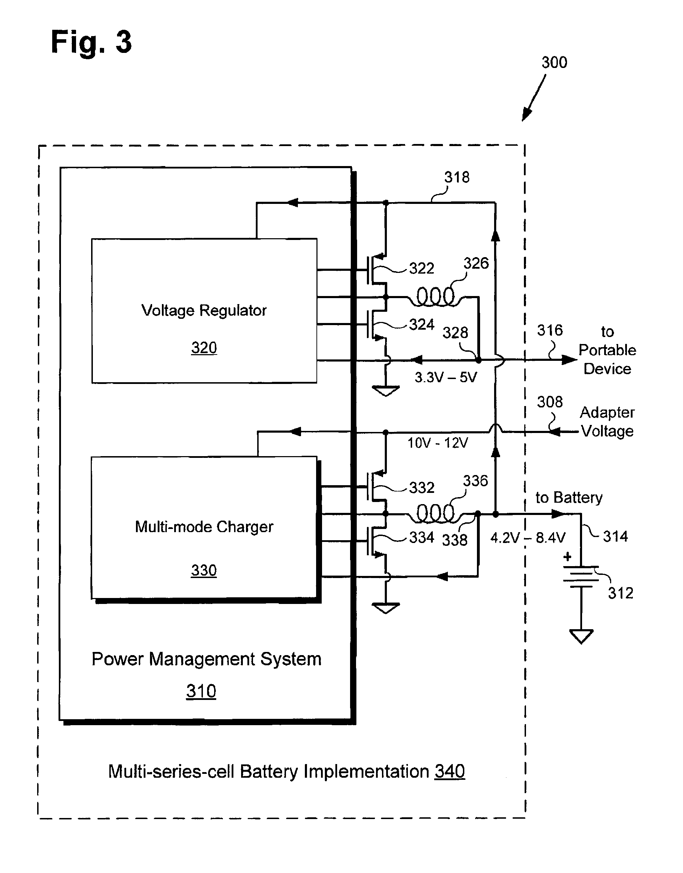

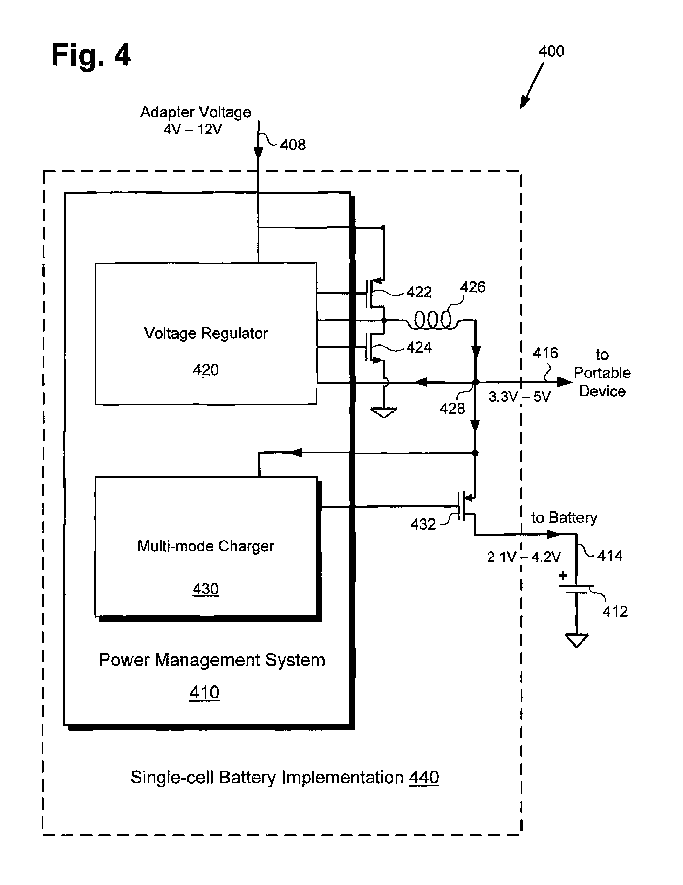

As will become more apparent by reference to Figures 3 and 4 and the discussion below, the multi-mode capability of multi-mode charger 230 enables considerable implementational flexibility, allowing power management system 210 to be adapted for use with single-cell batteries or multi-series-cell batteries, thereby enabling charge-and-play functionality across a wide variety of portable electronic devices having correspondingly different power requirements. Moreover, in one implementation, power management system 210 including voltage regulator 220 and multi-mode charger 230 may be implemented as an integrated circuit (IC) on a single semiconductor die. As a result, for example, a single chip design, such as that represented by power management system 210 may be adapted and implemented so as to advantageously enable use of the same power platform across all or a substantial portion of a manufacturer's portable device product line.

Referring to Figure 3, Figure 3 shows an example implementation of power management system 310 adapted for use in providing charge-and-play functionality for a portable device powered by a multi-series-cell battery, e.g. a two-series-cell battery, according to the specific example represented in Figure 3. More generally, however, the implementation of Figure 3 may be suitably configured to provide charge-and-play functionality for a portable device powered by a multi-series-cell battery having more than two cells connected in series.

Charge-and-play environment 300 shows multi-series-cell battery implementation 340 of power management system 310 comprising voltage regulator 320 and multi-mode charger 330. According to the implementation depicted in Figure 3, multi-mode charger 330 of power management system 310 is configured for use in a switching mode for charging multi-series-cell battery 312. As shown in Figure 3, multi-mode charger 330 receives input power to power management system 310, such as approximately 10 volt to approximately 12 volt adapter voltage 308. As further shown in Figure 3, power management system 310 utilizes voltage regulator 320 to produce an approximately 3.3 volt to approximately 5 volt internal supply voltage at node 328, and to provide output 316 for powering the portable device including power management system 310. Moreover, according to the implementation shown in Figure 3, voltage regulator 320, which may comprise a switching regulator, for example, derives input power from multi-series-cell battery 312, as indicated by path 318, and may be directly connected to multi-series-cell battery 312, as further indicated by path 318.

Multi-series-cell battery 312 is shown to be characterized by a voltage range of approximately 4.2 volts to approximately 8.4 volts, for example, wherein a voltage of 4.2 volts corresponds to an effective discharge state of multi-series-cell battery 312. Power management system 310, adapter voltage 308, multi-series-cell battery 312, power management system outputs 314 and 316, and path 318 correspond respectively to power management system 110, adapter voltage 108, battery 112, power management system outputs 114 and 116, and path 118, in Figure 1. Also included in multi-series-cell battery implementation 340 are high side switch 322, low side switch 324, and output inductor 326 of voltage regulator 320 for producing the internal supply voltage at node 328. In addition, multi-series-cell battery implementation 340 includes high side switch 332, low side switch 334, and output inductor 336 of multi-mode charger 330 configured to provide another, higher internal supply voltage at node 338 for charging multi-series-cell battery 312.

As shown in Figure 3, when a battery comprising two or more series cells is used, such as multi-series-cell battery 312, the external supply represented by adapter voltage 308 may be connected directly to multi-mode charger 330. As indicated in the two cell battery example of Figure 3, the voltage of two effectively discharged cells in series will not typically be below 4.2 volts. As a result, voltage regulator 320 can be powered by multi-series-cell battery 312 in its effectively discharged state because multi-series-cell battery 312 is being substantially concurrently charged by multi-mode charger 330. Moreover, due to multi-mode charger 330 being in switching mode, multi-series-cell battery 312 can be charged relatively quickly. Consequently, the portable device powered by output 316 provided by voltage regulator 320 can be turned ON and used substantially immediately and concurrently during charging of multi-series-cell battery 312 by multi-mode charger 330. That is to say, multi-series-cell battery implementation 340, shown in the implementation of Figure 3, enables multi-series-cell battery charge-and-play functionality for a portable device including power management system 310.

Continuing to Figure 4, Figure 4 shows an example implementation of power management system 410 adapted for use in providing charge-and-play functionality for a portable device powered by a single-cell battery. Charge-and-play environment 400 shows single-cell battery implementation 440 of power management system 410 comprising voltage regulator 420 and multi-mode charger 430. According to the implementation depicted in Figure 4, multi-mode charger 430 of power management syste 410 is configured for use in a linear mode for charging single-cell battery 412. As shown in Figure 4, voltage regulator 420, which may comprise a switching regulator, for example, receives input power to power management system 410, such as approximately 10 volt to approximately 12 volt adapter voltage 408. As further shown in Figure 4, power management system 410 utilizes voltage regulator 420 to produce an approximately 3.3 volt to approximately 5 volt internal supply voltage at node 428.

As may be seen from Figure 4, the internal supply voltage at node 428 can be used to provide output 416 for powering the portable device including power management system 410, as well as to power multi-mode charger 430 in linear mode, thereby enabling substantially immediate and concurrent use of the portable device powered by output 416 during charging of single-cell battery 412. Single-cell battery 412 is shown to be characterized by a voltage range of approximately 2.1 volts to approximately 4.2 volts, for example, wherein a voltage of 2.1 volts corresponds to an effective discharge state of single-cell battery 412. Power management system 410, adapter voltage 408, single-cell battery 412, and power management system outputs 414 and 416 correspond respectively to power management system 110, adapter voltage 108, battery 112, and power management system outputs 114 and 116, in Figure 1. Also shown in Figure 4 are high side switch 422, low side switch 424, and output inductor 426 of voltage regulator 420, for producing the internal supply voltage at node 428, as well as charge/discharge switch 432 controlled by multi-mode charger 430 so as to manage a charge/discharge current respectively to or from single-cell battery 412.

If single-cell battery 412 is initially in an effectively discharged state (e.g., battery voltage ≈ 2.1 volts) when an adapter supplying adapter voltage 408 is connected to the portable device including power management system 410, voltage regulator 420 may be configured to provide an initial approximately 3.3 volt internal supply voltage, for example, at node 428. The internal supply voltage at node 428 may be used substantially immediately to provide output 416 for powering the portable device including power management system 410. In addition, and as shown in Figure 4, the internal supply voltage at node 428 may be used to power multi-mode charger 430 operating in linear mode. The gate of charge/discharge switch 432 may then be controlled by multi-mode charger 430 to cause a charging current, such as a trickle current, for example, to flow from node 428 to charge singe cell battery 412 through charge/discharge switch 432. Moreover, as the voltage across single-cell battery 412 increases to approach approximately 3.3 volts, voltage regulator 420, which can be an adaptive voltage regulator, for example, may be configured to increase the internal supply voltage at node 428 so as to continue to charge single-cell battery 412 as it approaches its effectively fully charged state of approximately 4.2 volts.

According to one implementation, power management system 410 is further configured to short charge/discharge switch 432 in the event that adapter voltage 408 approaches zero or falls below a predetermined threshold. For example, in the implementation shown in Figure 4, charge/discharge switch 432 is represented as a p-channel field-effect transistor (PFET). In that implementation, the gate of PFET 432 would be pulled low in the event of removal of the adapter providing adapter voltage 408 so as to allow the portable device including power management system 410 to be powered by single-cell battery 412.

Thus, as discussed above, the present application discloses a power management system suitable for use with multi-series-cell batteries. By providing a power management system including a multi-mode charger adaptable for use in a high efficiency switching mode, the present concepts advantageously enable charge-and-play functionality for portable devices powered by multi-series-cell batteries. Moreover, by rendering the multi-mode charger further adaptable for use in a linear mode, the present concepts also enable use of the power management system with portable devices powered by single-cell batteries. As a result, a single IC design may be adapted and implemented so as to advantageously enable use of substantially the same power platform across all or a significant portion of a manufacturer's portable device product line.

From the above description it is manifest that various techniques can be used for implementing the concepts described in the present application without departing from the scope of those concepts. Moreover, while the concepts have been described with specific reference to certain implementations, a person of ordinary skill in the art would recognize that changes can be made in form and detail without departing from the spirit and the scope of those concepts. As such, the described implementations are to be considered in all respects as illustrative and not restrictive. It should also be understood that the present application is not limited to the particular implementations described herein, but many rearrangements, modifications, and substitutions are possible without departing from the scope of the present disclosure.

## Claims

1. A power management system for powering a portable device while charging a multi-series-cell battery of said portable device when said portable device is connected to an adapter, said power management system comprising:
a voltage regulator for powering said portable device;
a multi-mode charger receiving input power from said adapter;
said multi-mode charger being in a switching mode for charging said multi-series-cell battery concurrently with said voltage regulator powering said portable device.

2. The power management system of claim 1, wherein said multi-mode charger is coupled directly to said adapter.

3. The power management system of claim 1, wherein said voltage regulator derives input power from said multi-series-cell battery of said portable device.

4. The power management system of claim 1, wherein said voltage regulator is coupled directly to said multi-series-cell battery of said portable device.

5. The power management system of claim 1, wherein said voltage regulator comprises a switching regulator.

6. The power management system of claim 1, wherein said voltage regulator and said multi-mode charger are implemented as an integrated circuit (IC) on a single semiconductor die.

7. The power management system of claim 1, wherein said portable device is a consumer electronics device.

8. The power management system of claim 1, wherein said portable device is a mobile communications device.

9. The power management system of claim 1, wherein said portable device is a digital media player.

10. The power management system of claim 1, wherein said portable device is a tablet computer.

11. The power management system of claim 1, wherein said multi-mode charger is configured to receive an adapter voltage of greater than approximately 5 volts from said adapter.

12. A power management system for powering a portable device while charging a single-cell battery of said portable device when said portable device is connected to an adapter, said power management system comprising:
a voltage regulator receiving input power from said adapter;
said voltage regulator powering said portable device and a multi-mode charger;
said multi-mode charger being in a linear mode for charging said single-cell battery concurrently with said voltage regulator powering said portable device.

13. The power management system of claim 12, wherein said voltage regulator is coupled directly to said adapter.

14. The power management system of claim 12, wherein said voltage regulator comprises a switching regulator.

15. The power management system of claim 12, wherein said voltage regulator and said multi-mode charger are implemented as an integrated circuit (IC) on a single semiconductor die.
